# EUROPEAN PATENT APPLICATION

(11) **EP 4 770 036 A2**
(43) Date of publication of application: **01.07.2026**
(21) Application number: 25225067.5
(22) Date of filing: 18.12.2025
(51) Int. Cl.: H04L 45/00, H04L 45/24, H04L 45/28

(54) **FAULT TOLERANT INTERCONNECT LINK**

(30) Priority: 24.12.2024 US 202463738567 P
(71) Applicant: Google LLC, Mountain View, CA 94043 (US)
(72) Inventor: LAM, Cedric Fung, Mountain View, California, 94043 (US); ZHOU, Xiang, Mountain View, California, 94043 (US); LIU, Hong, Mountain View, California, 94043 (US); YIN, Shuang, Mountain View, California, 94043 (US); DASHTI, Pedram Zare, Mountain View, California, 94043 (US); PAPEN, George Crandon, Mountain View, California, 94043 (US); JOUPPI, Norman Paul, Mountain View, California, 94043 (US); GEIS, Arnd, Mountain View, California, 94043 (US); LACY, William Stephen, Mountain View, California, 94043 (US); LI, Sheng, Mountain View, California, 94043 (US); RAMIREZ BELLIDO, Alejandro, Mountain View, California, 94043 (US)
(74) Representative: Betten & Resch

(57) **Abstract**

The technology is generally directed to the continued use of a link between nodes of a network in which at least one of the lanes in the link has failed. Rather than identify the link as a failure in response to a lane failure, the traffic may be redistributed amongst the remaining lanes in the link. The redistribution of traffic may result in the link operating in a degraded mode. To mitigate the reduced traffic capacity of the degraded mode, the remaining links may be overclocked, such that the bandwidth of each link is increased to return the link to a traffic capacity corresponding to the initial capacity. In some examples, the traffic may be diverted to a redundant, otherwise inactive lane, thereby allowing for the traffic to be transmitted and received via the link, without any degradation in the performance of the link.

## Description

### CROSS-REFERENCE TO RELATED APPLICATIONS

This application claims the benefit of the filing date of United States Provisional Patent Application No. 63/738,567 filed December 24, 2024, the disclosure of which is hereby incorporated herein by reference.

### BACKGROUND

High speed optical interconnects are used in network nodes, such as processors, to provide a communication channel such as for parallel processing. Optical interconnects allow for increased traffic speeds and longer system reaches between networked nodes, as compared to electrical interconnects. Longer links between network nodes can be implemented with optical modules connected by optical fibers.

Optical modules can fail in the field, which is detrimental to the performance of the network. A failure of an optical module, the optical fibers, or other componentry linking the optical modules together may render the link between the optical modules unusable. As such, the traffic on the failed link has to be rerouted over another link. Such rerouting can penalize links between other networked nodes, such as by doubling the traffic load between the other nodes. This is detrimental to the performance of the network, as rerouting traffic can increase the latency of the system such as by adding additional hops to direct the traffic between nodes, adding distance the traffic must traverse, and subjecting the traffic to delays caused by increased traffic loads over links.

### BRIEF SUMMARY

The technology is generally directed to the continued use of a link between nodes of a network in which at least one of the lanes in the link has failed. Rather than identify the link as failed or unusable in response to a lane failure, thereby requiring the traffic intended for the link to be rerouted through neighboring nodes, the traffic may be redistributed amongst the remaining lanes in the link. The redistribution of traffic may result in the link operating in a degraded mode. To mitigate the reduced traffic capacity of the degraded mode, the remaining links may be overclocked, such that the bandwidth of each link is increased to return the link to a traffic capacity corresponding to, or near, the initial capacity, when all the lanes were active.

According to some examples, rather than operating in a degraded mode, the system may implement forward error correction (FEC) by increasing the coding block size. This can allow for all the data and parity bits, or symbols, to be striped across all the lanes, regardless of whether there is a lane failure. The traffic can continue to be transmitted and received between nodes via the link, without interruptions.

In yet another example, the link may include one or more redundant lanes. For example, a first subset of lanes in the link may be active lanes intended for traffic to be transmitted and received between nodes of the network. When one of the lanes in the subset fails, the traffic may be diverted to a redundant, otherwise inactive lane. This allows for the traffic to be transmitted and received via the link, without any degradation in the performance of the link.

One aspect of the disclosure is directed to a device, comprising a set of transceivers and one or more processors. The one or more processors may be configured to monitor a link between the set of transceivers and another set of transceivers, wherein the link comprises a plurality of lanes configured to route bidirectional data traffic between the sets of transceivers, determine, after detecting at least one lane of the plurality of lanes is in a failure status, a number of active lanes of the plurality of lanes, and redistribute the data traffic among the active lanes based on the number of active lanes.

The redistribution of the traffic among the number of active lanes may degrade a traffic capacity of the link between the sets of transceivers by the number of failed lanes after the failure status compared to the plurality of lanes. The one or more processors may be further configured to transmit the determination of the failure status to a second device including the other set of transceivers. Transmitting the determination of the failure status may comprise transmitting a signal of the failure to a second device including the other set of transceivers via at least one of reverse traffic on the at least one lane having the failure status or one of the number of active lanes.

When redistributing the data traffic, the one or more processors may be further configured to restripe the data traffic from the plurality of lanes to the number of active lanes. The one or more processors may include a digital signal processor. The set of transceivers may include a number of transceivers corresponding to a number of the plurality of lanes. The one or more processors may be further configured to overclock, based on the failure status of the at least one lane, the number of active lanes to maintain a bandwidth corresponding to an initial bandwidth of the plurality of lanes. The one or more processors may be further configured to transmit, to a host device, a signal to reduce a speed of the data traffic after the at least one lane is determined to be the failure status.

Another aspect of the disclosure is directed to a system, comprising a first device having a first set of transceivers, a second device having a second set of transceivers, and a link between the first and second sets of transceivers. The link may comprise a plurality of lanes configured to route traffic between the first and second sets of transceivers. At least one of the first or the second devices is configured to monitor the link, determine, after detecting at least one of the plurality of lanes is in a failure status, a number of active lanes of the plurality of lanes, and redistribute the traffic among the active lanes based on the number of active lanes.

Yet another aspect of the disclosure is directed to a method, comprising monitoring, by one or more processors of a first device, a link between a set of transceivers of the first device and another set of transceivers, wherein the link comprises a plurality of lanes configured to route data traffic between the sets of transceivers, determining, by the one or more processors, after detecting at least one lane of the plurality of lanes is in a failure status, a number of active lanes of the plurality of lanes, and redistributing, by the one or more processors based on the number of active lanes, the data traffic among the active lanes.

One aspect of the disclosure is directed to a device, comprising a set of transceivers and one or more processors configured to implement forward error correction (FEC). Implementing FEC comprises increasing an error correcting capability of code for data traffic between the set of transceivers and another set of transceivers. The data traffic is routed on a link between the sets of transceivers. The link comprises a plurality of lanes. Implementing FEC further comprises restriping data and parity symbols of the data traffic across the plurality of lanes.

The one or more processors may be configured to continue to route the data traffic across the plurality of lanes when the at least one lane is determined to be a failure status. The failure status may correspond to the at least one lane failing to transmit data symbols. Increasing the error correcting capability of the code for the data traffic may comprise increasing a parity coding to the data traffic.

Another aspect of the disclosure is directed to a system, comprising a first device comprising a first set of transceivers, a second device comprising a second set of transceivers, and a link between the first and second transceivers. The link may comprise a plurality of lanes configured to route data traffic between the first and second transceivers. At least one of the first or the second devices is configured to implement forward error correction (FEC). Implementing FEC comprises increasing an error correcting capability of code for the data traffic and restriping data and parity symbols of the data traffic across the plurality of lanes.

Yet another aspect of the disclosure is directed to a method, comprising implementing, by one or more processors of a first device a forward error correction (FEC). Implementing FEC comprises increasing an error correcting capability of code for data traffic being routed between a first set of transceivers of the first device and another set of transceivers. The data traffic is routed on a link between the first set of transceivers and the other set of transceivers, and the link comprises a plurality of lanes. Implementing FEC further comprises restriping data and parity symbols of the data traffic across the plurality of lanes.

One aspect of the disclosure is directed to a device, comprising a set of transceivers and one or more processors. The one or more processors may be configured to monitor a link between the set of transceivers and another set of transceivers. The link comprises a plurality of lanes configured to route data between the sets of transceivers, and each lane has a respective status including at least one of active, failure, or inactive. The one or more processors may be further configured to divert, after detecting at least one lane of the plurality of lanes is in a failure status, data to be transmitted via the at least one lane to another lane having a status of inactive.

The other lane having a status of inactive is a redundant lane. The device may further comprise a number of transceivers corresponding to a number (L) of the plurality of lanes, a multiplexer, and a plurality of serializer/deserializers (SerDes), wherein the plurality of SerDes corresponds to L minus 1. The multiplexer may have a ratio of (L-1):L.

Another aspect of the disclosure is directed to a system, comprising a first device comprising a first set of transceivers, a second device comprising a second set of transceivers, and a link between the first and second sets of transceivers. The link comprises a plurality of lanes configured to route traffic between the first and second transceivers, and the plurality of lanes includes a first subset of lanes and at least one other lane. At least one of the first or the second devices is configured to monitor the link, and divert, after detecting at least one lane of the first subset of lanes is in a failure status, data from the at least one lane of the first subset of lanes to the at least one other lane.

Yet another aspect of the disclosure is directed to a method, comprising monitoring, by one or more processors of a first device, a link between a first set of transceivers. The link comprises a plurality of lanes being configured to route traffic between the sets of transceivers, and each lanes has a respective status including at least one of active, failure, or inactive. The method further comprises diverting, by the one or more processors after detecting at least one lane of the plurality of lanes is in a failure status, traffic to be transmitted via the at least one lane to another lane having a status of inactive.

### BRIEF DESCRIPTION OF THE DRAWINGS

Figure 1 is a diagram of an example network, according to aspects of the disclosure.
Figure 2 is an example traffic flow for rerouting traffic when a lane in a link fails, according to aspects of the disclosure.
Figure 3 is another example traffic flow for rerouting traffic when a lane in a link fails, according to aspects of the disclosure.
Figure 4 is a block diagram of an example system, according to aspects of the disclosure.
Figure 5 is an example of a lane failure in the system of Figure 4, according to aspects of the disclosure.
Figure 6 is a graphical representation of raw coding gains (in dB) as compared to overhead percentages (%), according to aspects of the disclosure.
Figure 7 is a block diagram of another example system in which a lane has failed, according to aspects of the disclosure.
Figure 8 is a flow diagram for an example method of redistributing traffic in view of a lane failure, according to aspects of the disclosure.
Figure 9 is a flow diagram for an example method of implementing forward error correction (FEC) in view of a lane failure, according to aspects of the disclosure.
Figure 10 is a flow diagram for an example method 1050 of diverting traffic in view of a lane failure, according to aspects of the disclosure.

### DETAILED DESCRIPTION

The technology is generally directed to redistributing traffic between two nodes in a network. The network may include a plurality of nodes in which the nodes may be a combination of processors, networking devices, host systems, and/or other computing devices. The network may employ interconnects to connect the nodes in the network. The interconnects may be links having a plurality of lanes. The links may be configured to route bidirectional data traffic between components. In some examples, the interconnects may be optical links, such as fiber optic cables, having a plurality of lanes. In such an example, optical transceivers may be used in conjunction with the nodes to transmit and receive traffic via the optical links. The optical transceivers may be part of a module, such as an optical module, which can be connected to the nodes of the network.

Optical modules may fail in the field, causing interconnect link disruption. Disruption in a given link can degrade the performance of the network, such as when the network is used to execute artificial intelligence (AI) models, as the AI models employ a large number of optical interconnects. Typically, when an optical module fails, the failure is often the failure of a single lane due to a malfunctioning single transmitter laser or broken photo receiver. Previously, when a single lane in the link fails, the entire link is identified as unusable until the failed link is fixed or replaced. However, rather than the entirety of the link being unusable, thereby requiring the rerouting of traffic to other nodes in the network, the systems and methods described herein allow for the remaining lanes of the link to be used to transmit and receive the traffic between the modules.

According to some examples, the traffic between the nodes may be transmitted and received in a degraded mode, corresponding to a degradation of capacity. The degradation of capacity is determined based on the remaining number of lanes as compared to the total number of lanes in the link. The remaining number of lanes can be determined based on the total number of lanes in the link minus the number of failed lanes in the link.

To reduce latency in the traffic between nodes, optical modules may be overclocked. Optical modules are typically designed with operating margins such that the system would be able to operate at a higher speed with reduced reliability. As the operating margins are greater than what the system requires, the optical modules may be overclocked, thereby increasing the rate, or speed, at which the optical modules operate to account for operating with fewer than the total number of lanes. This allows for the system to continue to operate as expected, with little to no increase in the latency of the overall network, until the module with the failed component is replaced or repaired.

In another example, rather than degrading the system and, therefore, having to overclock the optical modules to operate as intended during a failure, the modules may employ forward error correction (FEC). For example, the system may use FEC to stripe the data and parity bits, or symbols, across all lanes. In such an example, even with a lane failure in the link, the modules may continue to transmit and receive traffic between the nodes without adding glitches. This allows for the link between nodes to continue operating without latency to restore traffic, e.g., via link degradation and/or overclocking the lanes that are not in a failure mode.

In yet another example, the modules may include redundant lanes each of which has its own redundant transceiver in the link between nodes. The modules may include a multiplexer (MUX). The MUX may be a L:L+X MUX, where L is the number of lanes actively transmitting and receiving traffic when all lanes are in working order and X is the number of redundant lanes. When a lane failure between nodes is detected, the traffic from the failed lane may be rerouted from the failed lane to the redundant lane.

By continuing to send and receive traffic of the link having the failed lane, the nodes can continue to transmit and receive traffic directly, without having to reroute the traffic to other paths. This eliminates competition for transmitting and receiving traffic on the other, neighboring paths in the network due to the rerouted traffic. Further, by continuing to have a direct link between nodes, the need to reconfigure the routing table, which may then affect other routing layers of the system, is eliminated. Additionally, by continuing to use the remaining lanes, the system does not have to change the address of the routing scheme. In particular, by continuing to send and receive traffic via the link having the failed lane, network resources, such as processing power, is reduced by not having to reconfigure and implement an updated routing table and/or changing the address of the routing scheme. Further, the systems and methods described above and herein allow for the host systems of the nodes to continue transmitting and receiving traffic between nodes with little to no latency or interruptions. In contrast, rerouting the traffic between nodes to neighboring nodes would not only increase the latency of the traffic intended for transmission between the initial nodes, as the traffic is now being rerouted, but the rerouting of traffic would also increase the latency of the initial traffic on the neighboring nodes.

While the examples provided above and herein are explained with respect to optical modules and optical interconnects, the systems and methods described can be used with respect to any interconnect. Accordingly, the examples provided with respect to optical modules and optical interconnects is just one example implementation of the technology described above and herein and is not intended to be limiting.

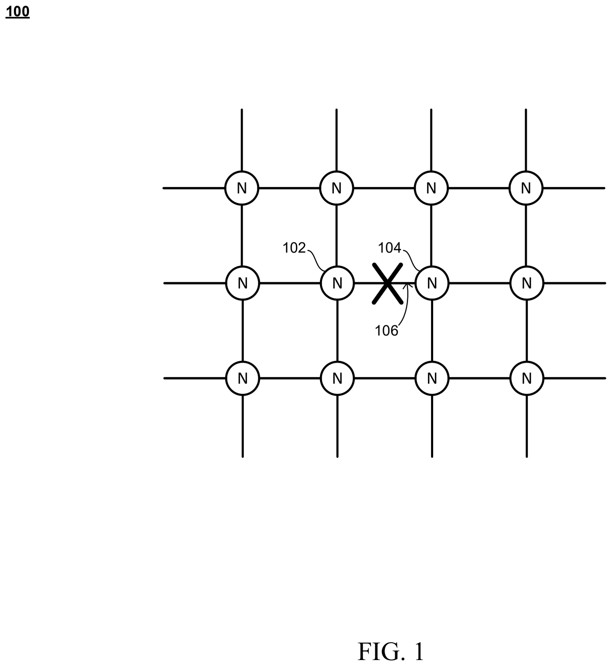

Figure 1 illustrates an example network 100. The network 100 includes a plurality of nodes "N". The nodes may be networking devices, such as switches and routers, host systems, and computing devices, such as a processor, memory, computer systems, or the like. The nodes N may include a network interface and be configured to perform network routing functions. In some examples, at least one of the nodes N in the network 100 may be an applications-specific integrated circuit (ASIC).

The nodes N are connected by interconnects, illustrated by the lines extending between each node N in Figure 1. In some examples, the interconnects may be referred to as links, and the terms "interconnect" and "link" may be used interchangeably herein. While the network 100 topology is shown in a grid pattern, the nodes N may be connected in any configuration. The interconnects may be optical interconnects, thereby providing or allowing for longer links between nodes N as compared to electrical interconnects. The optical interconnects may be, in some examples, referred to as optical links. The interconnects can include a plurality of lanes configured to transmit and receive traffic, e.g., data, between nodes N. Lanes that are functioning and, therefore, capable of transmitting and receiving traffic may be referred to as active lanes. Lanes that are not functioning and, therefore, are incapable of transmitting and receiving traffic may be referred to as failed lanes or as lanes having a failure status.

In examples where the links are optical links, the links may be implemented in conjunction with optical modules connected by optical fibers. For example, the nodes N may be host systems such that optical modules may be removably couplable to the host systems. The optical modules may allow for the optical interconnect, or link, to connect the optical modules at each node N. A typical form factor of the optical module may be the Octal SmallForm Factor Pluggable (OSFP), which includes eight (8) parallel data connections to a host processor (e.g., node N or host system) using electrical serializer/deserializers (SerDes). The line side of the OSFP module may include a parallel optical interface with eight (8) parallel lanes. For example, an 800Gb/s OSFP module has an 8x100G electrical interface to the host processor and an 8x100G optical interface to connect to a partner OSFP module on a different host processor.

According to some examples, the optical module may fail, causing interconnect link disruption between nodes N. The disruption can lead to a loss of data, increased latency in traffic in the network, and the like. As shown in Figure 1, the link 106 between node 102 and node 104 has failed. The failure may be due to, for example, a malfunctioning single transmitter laser or broken photoreceiver, which can cause at least one lane in the link 106 to fail.

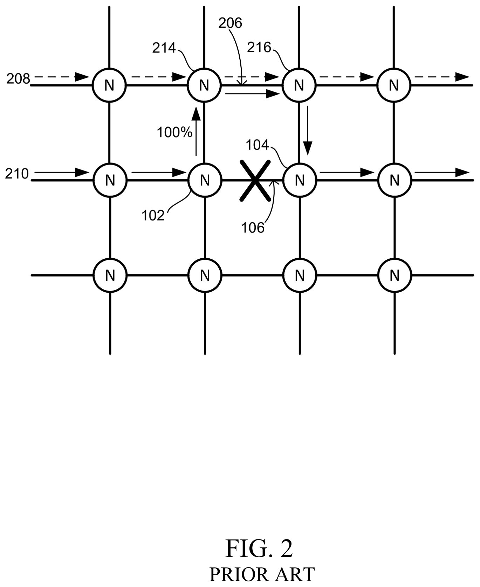

Figure 2 is an example of one way to restore traffic between node 102 and node 104 when at least one lane in link 106 fails. As shown, all of the traffic 210 that would have been routed between node 102 and node 104 has been rerouted around the failed link 106. In particular, the traffic is routed from node 102, to node 214, to node 216, and back to node 104. By rerouting all of the traffic 210 to nodes 214 and 216, the link 206 between node 214 and node 216 is penalized as the traffic load between node 214 and node 216 may be doubled or more. For example, due to the rerouting of traffic 210, the link 206 now has the initial load of traffic 208 as well as the load of traffic 210. In addition, the rerouting of traffic 210 to nodes 214, 216 increases the latency of traffic 210 due to two extra hops, e.g., from node 102 to node 214 and from node 216 to node 104.

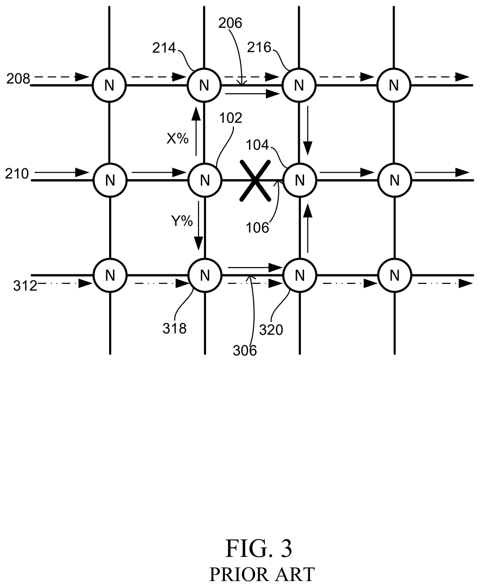

Figure 3 is another example of restoring traffic between node 102 and node 104 when link 106 fails. As compared to Figure 2, rather than rerouting all the traffic 210 to nodes 214 and 216, the traffic 210 is split such that some of the traffic 210 is rerouted from node 102 to nodes 214 and 318. The traffic split to nodes 214 and 318 is then routed from nodes 214 and 318 to node 104. For example, X% of traffic 210 may be rerouted to nodes 214 and 216, while Y% of traffic 210 is rerouted to nodes 318 and 320. The total of X+Y is 100% of the traffic 210.

While the rerouting illustrated in Figure 3 decreases the penalties experienced by link 206 and link 306, as compared to the entirety of the traffic 210 being rerouted to a single link, the loads on links 206, 306 are still increased as compared to the expected traffic 208, 312. That is, the load on each link 206, 306 is increased in proportion to the percentage of traffic 210 that is rerouted to the links 206, 306, respectively. Further, in addition to penalizing links 206, 306, splitting the traffic 210 would require additional processing to determine how to partition the traffic 210 between the rerouting paths and, subsequently, how to put the packets back in order at the receiving end, *e.g.,* node 104.

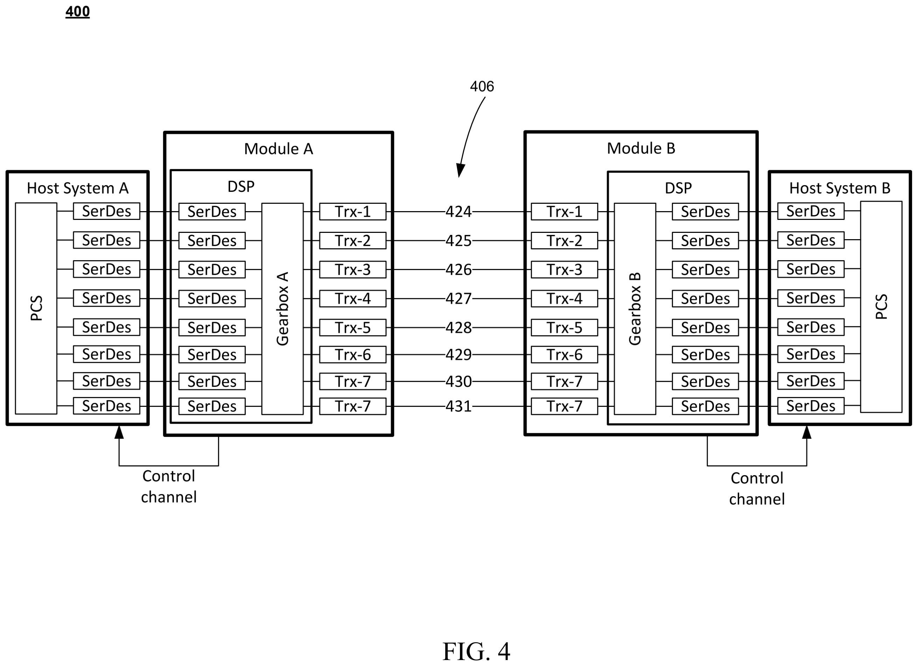

Figure 4 illustrates an example system 400 for maintaining traffic between nodes, even when at least one lane in the link between nodes fails. The system 400 includes host system A and host system B, which are each networked nodes, connected by link 406. Although Figure 4 illustrates the link 406 as being between host systems, in other examples the link 406 may be between components or modules A, B. The modules A, B may be optical modules. In some examples, the modules A, B may be pluggable modules such that the modules A, B can easily be swapped out for another module when a given module fails. For example, the modules A, B may be removably couplable to the respective host systems A, B. The host systems A, B are connected to the respective modules A, B through parallel electrical SerDes. The host systems A, B may be terminated on a physical coding sublayer (PCS). In some examples, the PCS may be the PCS as specified in the IEEE 802.3 Ethernet PHY standard.

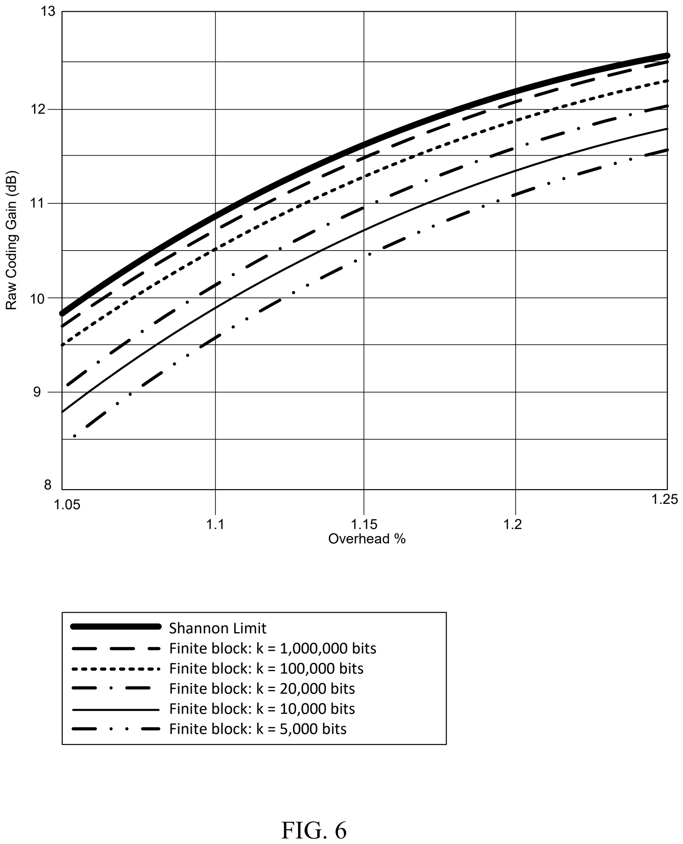

The modules A, B may include respective processors. The processors may be, for example, digital signal processors (DSP). The DSP may be configured to perform signal processing, such as equalization to compensate for the signal distortions in both the host system electrical channel and the link 406. In some examples, the DSP is, additionally, configured to implement forward error correction (FEC), as described in more detail with respect to Figure 6.

The link 406 includes a plurality of lanes 424-431. As shown, the link 406 includes eight (8) lanes. However, any number of lanes may be in a given link such that eight lanes is just one example and is not intended to be limiting. Each lane 424-431 is connected to a respective transceiver (TRx) on each end of the lane 424-431. In examples where link 406 is an optical link and modules A, B are optical modules, the TRxs are optical TRxs. The number of TRxs may correspond to the number of lanes in the link. The configuration shown in Figure 4 may be referred to as a logical link, consisting of eight (8) parallel physical lanes. Further, while only one link 406 is shown connecting modules A, B and, therefore, host systems A, B, any number of links may be used to connect modules A, B and/or host systems A, B. Accordingly, a single link 406, as shown, is just one example and is not intended to be limiting.

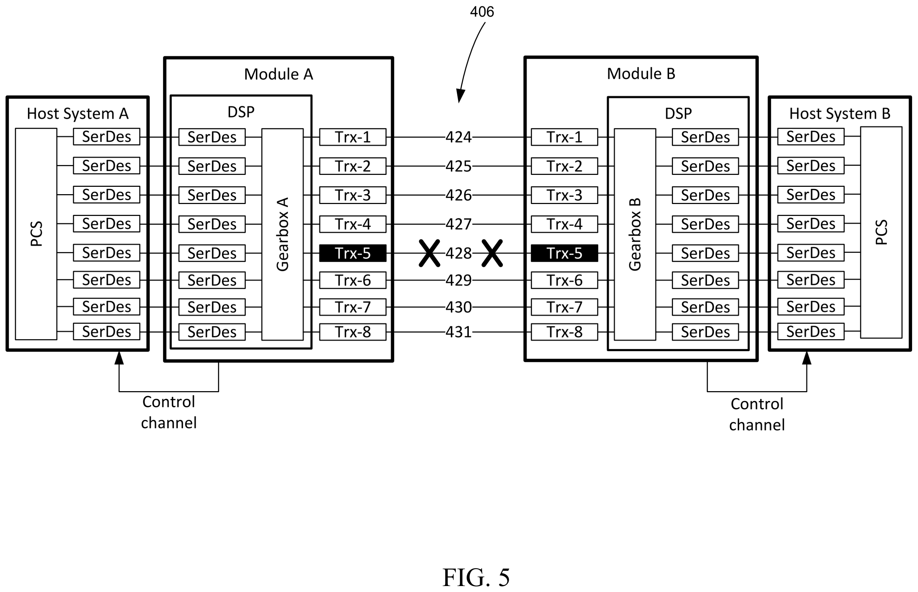

Figure 5 illustrates an example in which a given lane in the link between nodes fails. Typically, a failure in any given lane of link 406 would render the entirety of link 406 unusable. A link failure would trigger a rerouting of the traffic from the failed link to neighboring nodes, thereby causing an overload on the neighboring links and increasing the latency on both the rerouted traffic and the traffic initially intended for the neighboring links.

As shown in Figure 5, lane 428 has failed. Instead of failing the entirety of link 406 and rerouting traffic, as described with respect to Figures 2 and 3, the traffic between host systems A and B continues to be transmitted and received via the remaining active lanes, e.g., lanes 424-427 and lanes 429-431, of link 406. While the failure of lane 428 may degrade the capacity of link 406, the traffic between host systems A and B does not have to be rerouted to other paths, thereby eliminating competition on neighboring network paths. In particular, the continued use of link 406, even with a failed lane 428, prevents neighboring links from being overloaded.

The transceiver TRx-5 in module A, coupled to the failed lane 428, may receive a loss of lock (LOL) or loss of signal (LOS), which may be due to a failed receiver in module A or a failed transmitter in its link partner module B. According to some examples, the LOL may be reported by the DSP of module A while the LOS is reported by TRx-5. In some examples, the LOS may be reported by a receiver transimpedance amplifier (TIAs). The DSP in module A may detect the lane 428 failure and identify lane 428 as failed or unusable. Module A may signal module B regarding the failure of lane 428. For example, using overhead bytes in the signal frames, module A may signal module B of the failure of lane 428. The signal transmitted from module A to module B ensures that both module A and module B are aware that lane 428 in the direction from module B to module A is to be avoided. The signal may be transmitted by the transceivers and/or the DSP of a given module.

In some examples, while lane 428 may fail such that module A cannot receive traffic from module B, lane 428 may still be functional in the reverse direction, e.g., from module A to module B. In such an example, the functioning direction of lane 428 can be used for module A to signal module B that lane 428 has failed at least in the direction of module B to module A.

In yet another example, modules A, B may use one of the other active, functioning lanes, *e.g.,* lanes 424-427 and lanes 429-431, to transmit the signal regarding the failure of lane 428, exchange handshake information to adjust the setting of the respective DSPs to use the remaining functioning lanes to continue the transmission of traffic between modules A, B.

Each module A, B includes respective processors, such as digital signal processors (DSP). The DSP may include a plurality of SerDes and a gearbox. The number of SerDes may correspond to the number of lanes between the host system and the module. The gearbox may have a ratio of L:M, where L is the total number of lanes in the module generating the link and M is the number of active lanes in the link. The number of active lanes in the link may be determined based on the total number of lanes in the link minus the number of lanes having a failure status. When all lanes 424-431 of link 406 are functioning, e.g., active, the L:M ratio of the gearbox is 8:8, or, as simplified, 1:1. A 1: 1 ratio of the gearbox indicates that the gearbox is set in straight through mode.

In the example shown, where lane 428 has failed or is otherwise malfunctioning in the module B to module A direction, the L:M ratio for gearbox B will be adjusted to 8:7. The gearbox, for example, may be one of the functional blocks of the DSP. The DSP may, in some examples, automatically adjust the L:M mapping ratio when a LOL and/or LOS signal is detected. By adjusting the ratio of the gearbox B based on the number of lanes failed, *e.g.,* one in the example of Figure 5, the traffic received from host system B is remapped from the initial total number of lanes, *e.g.,* eight (8), to the remaining number of active, functioning lanes, *e.g.,* seven (7). The gearbox A in the DSP of Module A may, concurrently, adjust its ratio to 8:7. This allows for the traffic received by module A via the seven remaining active lanes to be restored to the original number of lanes, *e.g.,* eight (8), before being transmitted to host system A.

The determination of a failed lane and the adjustment of the ratio of gearboxes A, B can occur on the order of microseconds to milliseconds. Such quick adjustments of the ratio of the gearboxes may allow for any lane failure to be transparent to the system. That is, by quickly adjusting the ratio of the gearboxes A, B as a result of a lane failure, the host systems A, B may continue to transmit and receive traffic normally, with little to no interruption. Further, as the link 406 between host systems A, B continues to operate, even with a lane failure, nothing in the software of the host systems A, B has to be updated. Rather, any changes occur within the modules A, B at each end of link 406.

According to some examples, when the traffic is redistributed among the remaining active lanes, e.g., lanes 424-427 and lanes 429-431, traffic may backup on one or both host systems A, B. In some host systems, the protocol may generate backup notification signal such that the rate of incoming traffic is decreased. In other host systems, the traffic backup may overflow the incoming buffer and get dropped, thereby disrupting the higher layer links. The higher levels of the network that use the links may include, for example, the networking and/or a routing protocol layer that controls the information conveyed on the links. For example, the networking and/or routing protocol layer may be on top of the physical link layer, e.g., SerDes, Modules A, B, fiber, etc. In such examples, an external control channel may be used to signal the host to reduce the clock speed of the communication link to match the degraded function of link 406. For example, one or more processors in modules A and/or B may transmit a notification signal to their respective host systems A or B to reduce the clock speed of the traffic over link 406 to match the degradation of link 406 due to the failure of one or more lanes.

In some examples, to reduce the effects of the degradation of link 406 due to the failure of a given lane, *e.g.,* lane 428, the modules A and B may overclock the remaining active lanes. The modules A and B may overclock the remaining lanes based on a ratio of the total number of lanes in the link to the remaining number of active lanes after a failure. In this example, the overclock ratio for each of the seven remaining active lanes would be 8:7. By overclocking the remaining lanes, the traffic capacity of link 406 may be maintained as if all lanes 424-431 are functioning. By overclocking the remaining lanes, the remaining lanes 424-427 and lanes 429-431 are transmitting and receiving traffic at an increased speed as compared to when all lanes 424-431 are functioning as intended. In the example shown, with lane 428 being in failure, the remaining seven active lanes are transmitting and receiving traffic at a speed 14.3% higher than if all the lanes 424-431 were transmitting and receiving traffic.

Overclocking the remaining lanes allows for the system 400 to continue transmitting and receiving traffic, e.g., data, at full capacity, even when one or more lanes in the link 406 has failed. The modules A, B may continue to overclock the remaining lanes until the module(s) with the failed component can be replaced, thereby restoring the system 400 to full performance. The overclocking of the remaining lanes allows for link 406 to continue to transmit and receive traffic without interruptions.

Figure 6 is a graphical representation of raw coding gains (in dB) as compared to overhead percentages (%). The link 406 contains lanes 424-431, a total of eight (8) lanes. The traffic on link 406 is striped across lanes 424-431. The system 400 may implement a forward error correction (FEC) and stripe all the data and parity symbols across all lanes 424-431. For example, a 25% overhead FEC on an 8x300Gb/s physical link can effectively yield a connection of 8x240Gb/s throughput. The failure of lane 428 of lanes 424-431 results in a bit error rate (BER) of 1.25e-1, with the remaining lanes operating at a lower BET. For the same coding overhead, an increased coding gain may be obtained by increasing the error correcting capability for the traffic. In some examples, one or more processors, such as the DSP, in the modules A, B may increase the coding block size and/or the number of parity symbols in the code. The coding block size may be determined based on the FEC BER threshold of 1.25e-1 and the latency requirements of the system.

According to some examples, by increasing the block size, the system 400 can continue to transmit and receive traffic on link 406 without interruption. In particular, the link 406 continues to operate, even with at least one failed lane, such that the host systems A, B are unaware of the lane failure. By increasing the coding block size, there is no downtime on link 406.

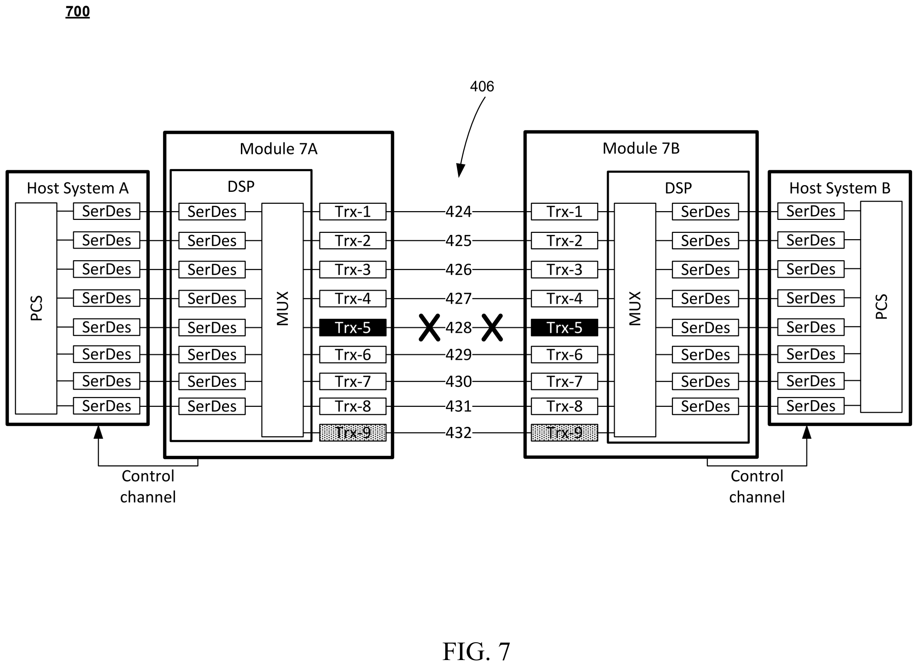

Figure 7 is an example system 700 for maintaining traffic between nodes, even when a lane in the link between nodes fails. The system 700 may be substantially similar to system 400. As compared to system 400, the modules 7A, 7B include one or more TRxs as compared to the number of SerDes in the DSP. The additional TRxs provide for additional lanes within link 406.

As shown, each DSP includes nine (9) TRxs, while there are only eight (8) SerDes. The ninth TRx, e.g., TRx-9, in each DSP is at opposite ends of lane 432. For example, only eight lanes 424-431 may be active lanes, while the ninth lane 432 is inactive. An inactive lane may be a lane in standby mode. For example, an inactive lane may be a redundant lane in standby mode such that when an active lane fails, the traffic intended for the active lane is transmitted and received via the redundant lane.

Further, as compared to system 400, the DSPs of modules 7A and 7B include a multiplexer (MUX) instead of a gearbox. The MUX may have a ratio of L to L+X, where L is the total number of active lanes and X is the number of redundant lanes. As shown, the MUX in the DSPs of modules 7A, 7B have a ratio of 8:9, as there are eight (8) active lanes (such that L=8) and one redundant lane (such that X=1).

In the example in Figure 7, link 406 includes a plurality of lanes 424-432. A subset of lanes may be active lanes, such as lanes 424-431 while lane 432 is inactive, as indicated by the grayed transceivers TRx-9. The number of active lanes may correspond to N while the number of inactive lanes corresponds to "X" in the ratio for the MUX. When a given lane, such as lane 428, fails, the DSP of the receiving module 7A, 7B detects the failure and signals the other module. In response to detecting the failure and/or receiving the signal indicating the failure, the respective MUX of the DSP of each module 7A, 7B is reconfigured to redirect the traffic intended for the failed lane 428 to the redundant lane 432. Traffic between modules 7A, 7B is restored to full capacity without penalizing the performance of link 406. Further, the rerouting of traffic from the failed lane 428 to the redundant lane 432 is transparent to the host systems A, B, such that no reconfiguration of the host systems A, B is necessary.

The systems and methods described above and herein allow for traffic between nodes in a network to continue being transmitted and received via a link that would otherwise be deemed unusable due to a lane failure. Accordingly, rather than identify the link as a complete failure, thereby requiring the rerouting of traffic to neighboring nodes, the link can continue to transmit and receive traffic without having to modify other logic layers, change the interface between host systems and modules, or losing bandwidth. For example, if traffic were rerouted to neighboring nodes in view of a lane failure within a link, the routing table would have to be reconfigured, which affects other routing layers of the system. Moreover, rerouting traffic to neighboring nodes increases the traffic on the neighboring nodes, thereby increasing the latency of the system.

Instead of rerouting traffic, the traffic on the node may be redistributed amongst the remaining, active, functioning lanes of the link. While this may cause the link to operate in a degraded mode, traffic can continue to be transmitted and received via the link, even with the lane failure. This prevents the neighboring nodes from experiencing increased traffic and, therefore, an increase in latency in the system as a whole. Further, to counteract the degraded operating mode of the link, the system can overclock the remaining lanes such that the bandwidth and traffic capacity of the link operates as if there are no lane failures. Further, in examples where FEC is implemented in response to a lane failure, the use of FEC simplifies signaling between modules and allows for traffic to continue between the modules without any interruptions.

### Example Methods

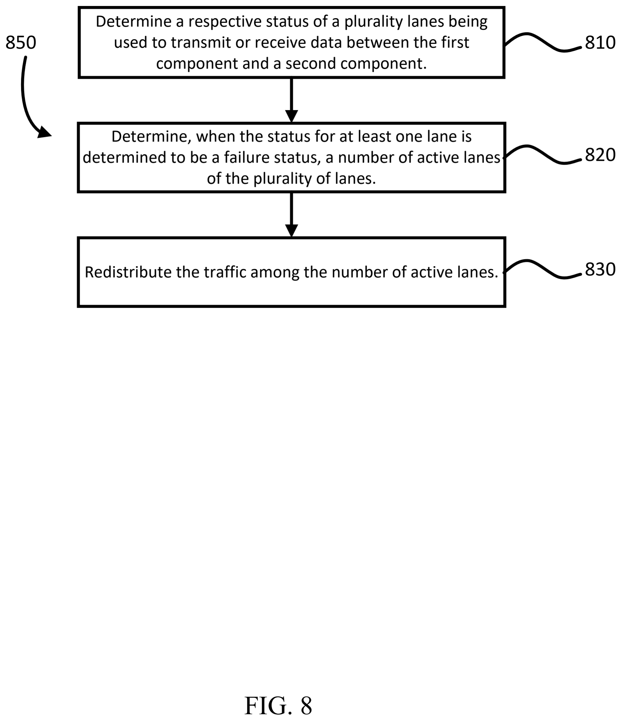

Figure 8 is a flow diagram for an example method 850 of redistributing traffic in view of a lane failure. The following operations do not have to be performed in the precise order described below. Rather, various operations can be handled in a different order or simultaneously, and operations may be added or omitted.

In block 810, a respective status of a plurality of lanes being used to transmit or receive data between a first component and a second component is determined.

In block 820, when the status for at least one lane is determined to be a failure status, a number of active lanes of the plurality of lanes is determined.

In block 830, the traffic is redistributed among the number of active lanes. Redistributing the traffic among the number of active lanes may include, for example, degrading a traffic capacity of a link comprising the plurality of lanes between the first and second components. The traffic capacity may be degraded by the number of failed lanes after the failure status compared to the plurality of lanes. For example,, when one lane fails out of the eight lanes, the overall capacity of the link is degraded by 1/8 (12.5%). When two lanes fail out of the eight lanes, the overall capacity of the link is degraded by 2/8, or 1/4 (25%), and so one.

According to some examples, to mitigate the effects of degrading the traffic capacity, the number of active lanes may be overclocked. Overclocking the number of active lanes may maintain a bandwidth among the active lanes corresponding to an initial bandwidth of the plurality of the lanes of the link.

In some examples, redistributing the traffic among the number of active lanes may include restriping the traffic from the plurality of lanes to the number of active lanes.

According to some examples, a determination of the failure status may be transmitted to the second component. Transmitting the determination of the failure status may include, for example, transmitting a signal of the failure to the second component via at least one of reverse traffic on the failed lane or via any one or more of the active lanes.

In some examples, a signal may be transmitted to a respective host device to reduce the speed of the traffic after determining a lane has failed. For example, each component may transmit a signal to a respective host system. The signal may be an indication for the host system to downclock the traffic via the link.

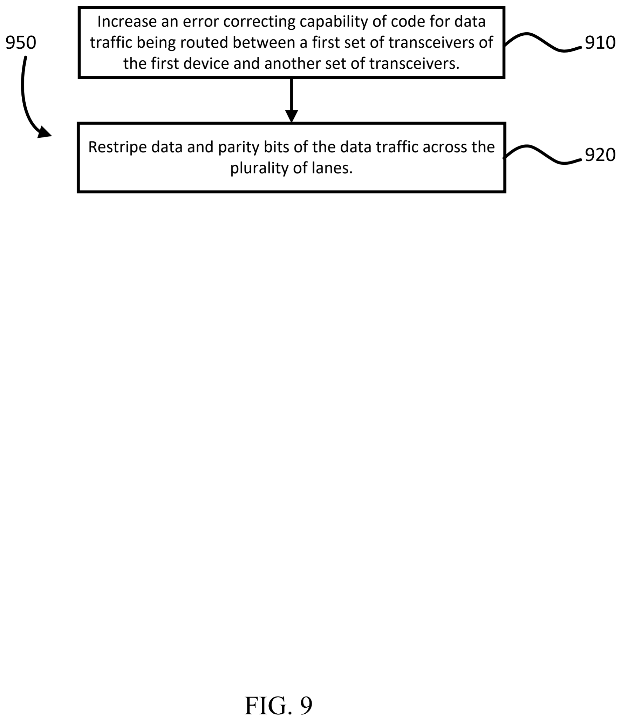

Figure 9 is a flow diagram for an example method 950 of implementing forward error correction (FEC) in view of a lane failure. The FEC is strong enough to protect the loss of a single lane in the plurality of lanes and still allow for reliable operation of the link between the first and second modules. The following operations do not have to be performed in the precise order described below. Rather, various operations can be handled in a different order or simultaneously, and operations may be added or omitted.

In block 910, to provide a strong enough FEC, an error correcting capability of code for the data traffic is increased. Increasing the error correcting capability of the code for the data traffic may include, for example, increasing a parity coding of the data traffic. In some examples, the coding block size of the data traffic is increased. The data traffic may be routed between a first set of transceivers of a first device and another set of transceivers. In some examples, the data traffic may be routed via a link between the sets of transceivers. The link includes a plurality of lanes. The data traffic may be, for example, bidirectional data traffic.

In block 920, the data and parity symbols of the data traffic are restriped across the plurality of lanes. Restriping the data and parity symbols may include, for example, remapping the data and parity symbols across the plurality of lanes. Restriping the data and parity symbols across the plurality of lanes allows for the data traffic to continue to be routed via the link even if one of the lanes of the link fails. A failure of a lane may be indicated by a failure status. The failure of a lane may correspond to a lane of the link failing to transmit data symbols.

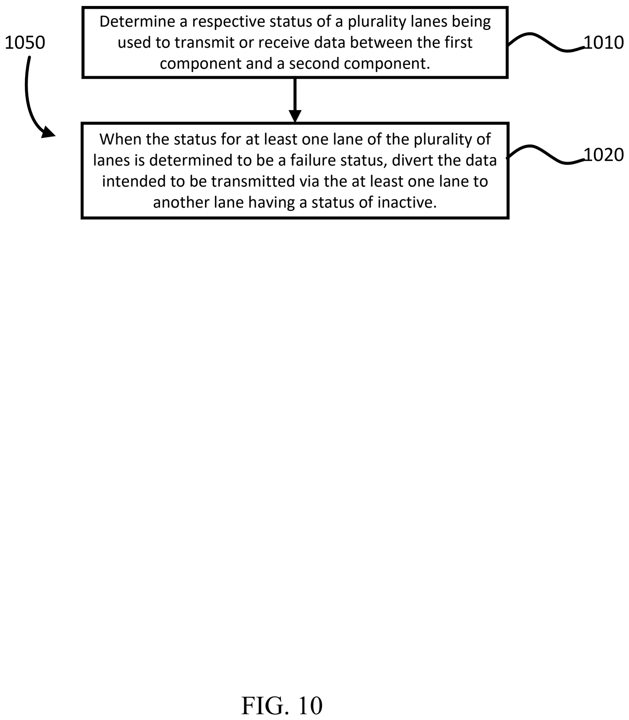

Figure 10 is a flow diagram for an example method 1050 of diverting traffic in view of a lane failure. The following operations do not have to be performed in the precise order described below. Rather, various operations can be handled in a different order or simultaneously, and operations may be added or omitted.

In block 1010, a respective status of a plurality of lanes being used to transmit or receive data between a first component and a second component is determined. The status may include active, failure, or inactive. For example, the plurality of lanes may have a subset of active lanes. The active lanes may be lanes in the link intended to transmit and receive traffic between components. Inactive lanes may be lanes not in the subset of active lanes. For example, inactive lanes may be redundant lanes, such that inactive lanes are in standby mode ready to be activated in the event of a lane failure. Lanes having a failure status may be lanes in which a given component cannot transmit or receive traffic from another component via the failed lane.

In block 1020, when the status for at least one lane of the plurality of lanes is determined to be a failure status, data intended to be transmitted via the at least one lane is diverted to another lane having a status of inactive.

Implementations of the present technology can each include, but are not limited to, the following. The features may be alone or in combination with one or more other features described herein. In some examples, the following features are included in combination:
(1) A device, comprising: a set of transceivers; and one or more processors configured to: monitor a link between the set of transceivers and another set of transceivers, wherein the link comprises a plurality of lanes configured to route data traffic between the sets of transceivers; determine, after detecting at least one lane of the plurality of lanes is in a failure status, a number of active lanes of the plurality of lanes; and redistribute the data traffic among the active lanes based on the number of active lanes.
(2) The device of (1), wherein the redistribution of the traffic among the number of active lanes degrades a traffic capacity of the link between the sets of transceivers by the number of failed lanes after the failure status compared to the plurality of lanes.
(3) The device of (1), wherein the one or more processors are further configured to transmit the determination of the failure status to a second device including the other set of transceivers.
(4) The device of (3), wherein transmitting the determination of the failure status comprises transmitting a signal of the failure to a second device including the other set of transceivers via at least one of reverse traffic on the at least one lane having the failure status or one of the number of active lanes.
(5) The device of (1), wherein when redistributing the data traffic, the one or more processors are further configured to restripe the data traffic from the plurality of lanes to the number of active lanes.
(6) The device of (1), wherein the one or more processors include a digital signal processor.
(7) The device of (1), wherein the set of transceivers includes a number of transceivers corresponding to a number of the plurality of lanes.
(8) The device of (1), wherein the one or more processors are further configured to overclock, based on the failure status of the at least one lane, the number of active lanes to maintain a bandwidth corresponding to an initial bandwidth of the plurality of lanes.
(9) The device of (1), wherein the one or more processors are further configured to transmit, to a host device, a signal to reduce a speed of the data traffic after the at least one lane is determined to be the failure status.
(10) A system, comprising: a first device having a first set of transceivers; a second device having a second set of transceivers; and a link between the first and second sets of transceivers, wherein the link comprises a plurality of lanes configured to route traffic between the first and second sets of transceivers, wherein at least one of the first or the second devices is configured to: monitor the link, determine, after detecting at least one of the plurality of lanes is in a failure status, a number of active lanes of the plurality of lanes, and redistribute the traffic among the active lanes based on the number of active lanes.
(11) The system of (10), wherein the redistribution of the traffic among the number of active lanes degrades a traffic capacity of the link between the first and second transceivers by the number of failed lanes after the failure status compared to the plurality of lanes.
(12) The system of (10), wherein the first or second device comprises one or more processors, the one or more processors configured to transmit, to a respective host device, a signal to reduce a speed of the traffic after the at least one lane is determined to be the failure status.
(13) The system of (10), wherein the first or second device comprises one or more processors, the one or more processors configured to overclock, based on the failure status of the at least one lane, the number of active lanes to maintain a bandwidth corresponding to an initial bandwidth of the link.
(14) A method, comprising: monitoring, by one or more processors of a first device, a link between a set of transceivers of the first device and another set of transceivers, wherein the link comprises a plurality of lanes configured to route data traffic between the sets of transceivers; determining, by the one or more processors, after detecting at least one lane of the plurality of lanes is in a failure status, a number of active lanes of the plurality of lanes; and redistributing, by the one or more processors based on the number of active lanes, the data traffic among the active lanes.
(15) The method of (14), redistributing the data traffic among the number of active lanes comprises degrading, by the one or more processors, a traffic capacity of a link comprising the plurality of lanes between the sets of transceivers, wherein the traffic capacity is degraded by the number of failed lanes after the failure status compared to the plurality of lanes.
(16) The method of (14), further comprising overclocking, by the one or more processors, based on the failure status of the at least one lane, the number of active lanes to maintain a bandwidth corresponding to an initial bandwidth of the plurality of lanes.
(17) A device, comprising: a set of transceivers; and one or more processors configured to implement forward error correction (FEC), wherein implementing FEC comprises: increasing an error correcting capability of code for data traffic between the set of transceivers and another set of transceivers, wherein: the data traffic is routed on a link between the sets of transceivers, and the link comprises a plurality of lanes; and restriping data and parity symbols of the data traffic across the plurality of lanes.
(18) The) device of (17), wherein the one or more processors are configured to continue to route the data traffic across the plurality of lanes when the at least one lane is determined to be a failure status.
(19) The device of (18), wherein the failure status corresponds to the at least one lane failing to transmit data symbols.
(20) The device of (17), wherein increasing the error correcting capability of the code for the data traffic comprises at least one of increasing a number of parity symbols in a code block to the data traffic or increasing a size of a code block.
(21) A system, comprising: a first device comprising a first set of transceivers; a second device comprising a second set of transceivers; and a link between the first and second transceivers, wherein the link comprises a plurality of lanes configured to route data traffic between the first and second transceivers, wherein at least one of the first or the second devices is configured to: implement forward error correction (FEC), wherein implementing FEC comprises: increasing an error correcting capability of code for the data traffic; and restriping data and parity symbols of the data traffic across the plurality of lanes.
(22) The system of (21), wherein at least one of the first or second devices is further configured to route the data traffic across the plurality of lanes when the at least one lane is determined to be a failure status.
(23) The system of (22), wherein the failure status corresponds to the at least one lane failing to transmit data symbols.
(24) The system of (21), wherein increasing the error correcting capability of the code for the data traffic comprises at least one of increasing a number of parity symbols in a code block to the data traffic or increasing a size of a code block.
(25) A method, comprising: implementing, by one or more processors of a first device a forward error correction (FEC), wherein implementing FEC comprises: increasing an error correcting capability of code for data traffic being routed between a first set of transceivers of the first device and another set of transceivers, wherein: the data traffic is routed on a link between the first set of transceivers and the other set of transceivers, and the link comprises a plurality of lanes; and restriping data and parity symbols of the data traffic across the plurality of lanes.
(26) The method of (25), further comprising routing, by the one or more processors, the data traffic across the plurality of lanes when the at least one lane is determined to be a failure status.
(27) The method of (26), wherein the failure status corresponds to the at least one lane failing to transmit data symbols.
(28) The method of claim (25), wherein increasing the error correcting capability of the code for the data traffic comprises at least one of increasing a number of parity symbols in a code block to the data traffic or increasing a size of a code block.
(29) A device, comprising: a set of transceivers; and one or more processors configured to: monitor a link between the set of transceivers and another set of transceivers, wherein: the link comprises a plurality of lanes configured to route data between the sets of transceivers, and each lane has a respective status including at least one of active, failure, or inactive; and divert, after detecting at least one lane of the plurality of lanes is in a failure status, data to be transmitted via the at least one lane to another lane having a status of inactive.
(30) The device of (29), wherein the other lane having a status of inactive is a redundant lane.
(31) The device of (29), further comprising: a number of transceivers corresponding to a number (L) of the plurality of lanes; a multiplexer; and a plurality of serializer/deserializers (SerDes), wherein the plurality of SerDes corresponds to L minus 1.
(32) The component of (31), wherein the multiplexer has a ratio of (L-1):L.
(33) A system, comprising: a first device comprising a first set of transceivers; a second device comprising a second set of transceivers; and a link between the first and second sets of transceivers, wherein: the link comprises a plurality of lanes configured to route traffic between the first and second transceivers, and the plurality of lanes includes a first subset of lanes and at least one other lane, wherein at least one of the first or the second devices is configured to: monitor the link; and divert, after detecting at least one lane of the first subset of lanes is in a failure status, data from the at least one lane of the first subset of lanes to the at least one other lane.
(34) A method, comprising: monitoring, by one or more processors of a first device, a link between a first set of transceivers, wherein: the link comprises a plurality of lanes being configured to route traffic between the sets of transceivers, and each lane has a respective status including at least one of active, failure, or inactive; and diverting, by the one or more processors after detecting at least one lane of the plurality of lanes is in a failure status, traffic to be transmitted via the at least one lane to another lane having a status of inactive.

Aspects of this disclosure can be implemented in digital electronic circuitry, in tangibly-embodied computer software or firmware, and/or in computer hardware, such as the structure disclosed herein, their structural equivalents, or combinations thereof. Aspects of this disclosure can further be implemented as one or more computer programs, such as one or more modules of computer program instructions encoded on a tangible non-transitory computer storage medium for execution by, or to control the operation of, one or more data processing apparatus. The computer storage medium can be a machine-readable storage device, a machine-readable storage substrate, a random or serial access memory device, or combinations thereof. The computer program instructions can be encoded on an artificially generated propagated signal, such as a machine-generated electrical, optical, or electromagnetic signal, which is generated to encode information for transmission to suitable receiver apparatus for execution by a data processing apparatus.

The term "configured" is used herein in connection with systems and computer program components. For a system of one or more computers to be configured to perform particular operations or actions means that the system has installed on its software, firmware, hardware, or a combination thereof that cause the system to perform the operations or actions. For one or more computer programs to be configured to perform particular operations or actions means that the one or more programs include instructions that, when executed by one or more data processing apparatus, cause the apparatus to perform the operations or actions.

The term "data processing apparatus" refers to data processing hardware and encompasses various apparatus, devices, and machines for processing data, including programmable processors, a computer, or combinations thereof. The data processing apparatus can include special purpose logic circuitry, such as a field programmable gate array (FPGA) or an application specific integrated circuit (ASIC). The data processing apparatus can include code that creates an execution environment for computer programs, such as code that constitutes processor firmware, a protocol stack, a database management system, an operating system, or combinations thereof.

The data processing apparatus can include special-purpose hardware accelerator units for implementing machine learning models to process common and compute-intensive parts of machine learning training or production, such as inference or workloads. Machine learning models can be implemented and deployed using one or more machine learning frameworks.

The term "computer program" refers to a program, software, a software application, an app, a module, a software module, a script, or code. The computer program can be written in any form of programming language, including compiled, interpreted, declarative, or procedural languages, or combinations thereof. The computer program can be deployed in any form, including as a stand-alone program or as a module, component, subroutine, or other unit suitable for use in a computing environment. The computer program can correspond to a file in a file system and can be stored in a portion of a file that holds other programs or data, such as one or more scripts stored in a markup language document, in a single file dedicated to the program in question, or in multiple coordinated files, such as files that store one or more modules, sub programs, or portions of code. The computer program can be executed on one computer or on multiple computers that are located at one site or distributed across multiple sites and interconnected by a data communication network.

The term "database" refers to any collection of data. The data can be unstructured or structured in any manner. The data can be stored on one or more storage devices in one or more locations. For example, an index database can include multiple collections of data, each of which may be organized and accessed differently.

The term "engine" refers to a software-based system, subsystem, or process that is programmed to perform one or more specific functions. The engine can be implemented as one or more software modules or components, or can be installed on one or more computers in one or more locations. A particular engine can have one or more computers dedicated thereto, or multiple engines can be installed and running on the same computer or computers.

The processes and logic flows described herein can be performed by one or more computers executing one or more computer programs to perform functions by operating on input data and generating output data. The processes and logic flows can also be performed by special purpose logic circuitry, or by a combination of special purpose logic circuitry and one or more computers.

A computer or special purposes logic circuitry executing the one or more computer programs can include a central processing unit, including general or special purpose microprocessors, for performing or executing instructions and one or more memory devices for storing the instructions and data. The central processing unit can receive instructions and data from the one or more memory devices, such as read only memory, random access memory, or combinations thereof, and can perform or execute the instructions. The computer or special purpose logic circuitry can also include, or be operatively coupled to, one or more storage devices for storing data, such as magnetic, magneto optical disks, or optical disks, for receiving data from or transferring data to. The computer or special purpose logic circuitry can be embedded in another device, such as a mobile phone, a personal digital assistant (PDA), a mobile audio or video player, a game console, a Global Positioning System (GPS), or a portable storage device, e.g., a universal serial bus (USB) flash drive, as examples.

Computer readable media suitable for storing the one or more computer programs can include any form of volatile or non-volatile memory, media, or memory devices. Examples include semiconductor memory devices, e.g., EPROM, EEPROM, or flash memory devices, magnetic disks, e.g., internal hard disks or removable disks, magneto optical disks, CD-ROM disks, DVD-ROM disks, or combinations thereof.

Aspects of the disclosure can be implemented in a computing system that includes a back end component, e.g., as a data server, a middleware component, e.g., an application server, or a front end component, e.g., a client computer having a graphical user interface, a web browser, or an app, or any combination thereof. The components of the system can be interconnected by any form or medium of digital data communication, such as a communication network. Examples of communication networks include a local area network (LAN) and a wide area network (WAN), e.g., the Internet.

The computing system can include clients and servers. A client and server can be remote from each other and interact through a communication network. The relationship of client and server arises by virtue of the computer programs running on the respective computers and having a client-server relationship to each other. For example, a server can transmit data, e.g., an HTML page, to a client device, e.g., for purposes of displaying data to and receiving user input from a user interacting with the client device. Data generated at the client device, e.g., a result of the user interaction, can be received at the server from the client device.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the examples should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible implementations. Further, the same reference numbers in different drawings can identify the same or similar elements.

## Claims

1. A device, comprising:
a set of transceivers; and
one or more processors configured to:
monitor a link between the set of transceivers and another set of transceivers, wherein the link comprises a plurality of lanes configured to route data traffic between the sets of transceivers;
determine, after detecting at least one lane of the plurality of lanes is in a failure status, a number of active lanes of the plurality of lanes; and
redistribute the data traffic among the active lanes based on the number of active lanes.

2. The device of claim 1, wherein the redistribution of the traffic among the number of active lanes degrades a traffic capacity of the link between the sets of transceivers by the number of failed lanes after the failure status compared to the plurality of lanes; and/or
wherein the one or more processors are further configured to transmit the determination of the failure status to a second device including the other set of transceivers; and
wherein transmitting the determination of the failure status optionally comprises transmitting a signal of the failure to a second device including the other set of transceivers via at least one of reverse traffic on the at least one lane having the failure status or one of the number of active lanes.

3. The device of claim 1 or claim 2, wherein when redistributing the data traffic, the one or more processors are further configured to restripe the data traffic from the plurality of lanes to the number of active lanes; and/or
wherein the one or more processors include a digital signal processor; and/or
wherein the set of transceivers includes a number of transceivers corresponding to a number of the plurality of lanes, and/or
wherein the one or more processors are further configured to overclock, based on the failure status of the at least one lane, the number of active lanes to maintain a bandwidth corresponding to an initial bandwidth of the plurality of lanes; and/or
wherein the one or more processors are further configured to transmit, to a host device, a signal to reduce a speed of the data traffic after the at least one lane is determined to be the failure status.

4. A system, comprising:
a first device having a first set of transceivers;
a second device having a second set of transceivers; and
a link between the first and second sets of transceivers, wherein the link comprises a plurality of lanes configured to route traffic between the first and second sets of transceivers,
wherein at least one of the first or the second devices is configured to:
monitor the link,
determine, after detecting at least one of the plurality of lanes is in a failure status, a number of active lanes of the plurality of lanes, and
redistribute the traffic among the active lanes based on the number of active lanes.

5. The system of claim 4, wherein the redistribution of the traffic among the number of active lanes degrades a traffic capacity of the link between the first and second transceivers by the number of failed lanes after the failure status compared to the plurality of lanes; and/or
wherein the first or second device comprises one or more processors, the one or more processors configured to transmit, to a respective host device, a signal to reduce a speed of the traffic after the at least one of the plurality of lanes is determined to be the failure status; and/or
wherein the first or second device comprises one or more processors, the one or more processors configured to overclock, based on the failure status of the at least one of the plurality of lanes, the number of active lanes to maintain a bandwidth corresponding to an initial bandwidth of the link.

6. A method, comprising:
monitoring, by one or more processors of a first device, a link between a set of transceivers of the first device and another set of transceivers, wherein the link comprises a plurality of lanes configured to route data traffic between the sets of transceivers;
determining, by the one or more processors, after detecting at least one lane of the plurality of lanes is in a failure status, a number of active lanes of the plurality of lanes; and
redistributing, by the one or more processors based on the number of active lanes, the data traffic among the active lanes.

7. The method of claim 6, redistributing the data traffic among the number of active lanes comprises degrading, by the one or more processors, a traffic capacity of a link comprising the plurality of lanes between the sets of transceivers, wherein the traffic capacity is degraded by the number of failed lanes after the failure status compared to the plurality of lanes; and/or
further comprising overclocking, by the one or more processors, based on the failure status of the at least one lane, the number of active lanes to maintain a bandwidth corresponding to an initial bandwidth of the plurality of lanes.

8. A device, comprising:
a set of transceivers; and
one or more processors configured to implement forward error correction (FEC), wherein implementing FEC comprises:
increasing an error correcting capability of code for data traffic between the set of transceivers and another set of transceivers, wherein:
the data traffic is routed on a link between the sets of transceivers, and
the link comprises a plurality of lanes; and
restriping data and parity symbols of the data traffic across the plurality of lanes.

9. The device of claim 8, wherein increasing the error correcting capability of the code for the data traffic comprises at least one of increasing a number of parity symbols in a code block or increasing a size of the code block; and/or
wherein the one or more processors are configured to continue to route the data traffic across the plurality of lanes when the at least one lane is determined to be a failure status; and
wherein the failure status optionally corresponds to the at least one lane failing to transmit data symbols.

10. A system, comprising:
a first device comprising a first set of transceivers;
a second device comprising a second set of transceivers; and
a link between the first and second transceivers, wherein the link comprises a plurality of lanes configured to route data traffic between the first and second transceivers,
wherein at least one of the first or the second devices is configured to:
implement forward error correction (FEC), wherein implementing FEC comprises:
increasing an error correcting capability of code for the data traffic; and
restriping data and parity symbols of the data traffic across the plurality of lanes.

11. The system of claim 10, wherein increasing the error correcting capability of the code for the data traffic comprises at least one of increasing a number of parity symbols in a code block or increasing a size of a code block; and/or
wherein at least one of the first or second devices is further configured to route the data traffic across the plurality of lanes when the at least one lane is determined to be a failure status; and
wherein the failure status optionally corresponds to the at least one lane failing to transmit data symbols.

12. A method, comprising:
implementing, by one or more processors of a first device a forward error correction (FEC), wherein implementing FEC comprises:
increasing an error correcting capability of code for data traffic being routed between a first set of transceivers of the first device and another set of transceivers, wherein:
the data traffic is routed on a link between the first set of transceivers and the other set of transceivers, and
the link comprises a plurality of lanes; and
restriping data and parity symbols of the data traffic across the plurality of lanes.

13. The method of claim 12, wherein increasing the error correcting capability of the code for the data traffic comprises at least one of increasing a number of parity symbols in a code block or increasing a size of a code block; and/or
further comprising routing, by the one or more processors, the data traffic across the plurality of lanes when the at least one lane is determined to be a failure status; and
wherein the failure status corresponds to the at least one lane failing to transmit data symbols.

14. A device, comprising:
a set of transceivers; and
one or more processors configured to:
monitor a link between the set of transceivers and another set of transceivers, wherein:
the link comprises a plurality of lanes configured to route data between the sets of transceivers, and
each lane has a respective status including at least one of active, failure, or inactive; and
divert, after detecting at least one lane of the plurality of lanes is in a failure status, data to be transmitted via the at least one lane to another lane having a status of inactive.

15. The device of claim 14, wherein the other lane having a status of inactive is a redundant lane; and/or
further comprising:
a number of transceivers corresponding to a number (L) of the plurality of lanes;
a multiplexer; and
a plurality of serializer/deserializers (SerDes), wherein the plurality of SerDes corresponds to L minus 1; and
wherein the multiplexer has a ratio of (L-1):L.

16. A system, comprising:
a first device comprising a first set of transceivers;
a second device comprising a second set of transceivers; and
a link between the first and second sets of transceivers, wherein:
the link comprises a plurality of lanes configured to route traffic between the first and second transceivers, and
the plurality of lanes includes a first subset of lanes and at least one other lane,
wherein at least one of the first or the second devices is configured to:
monitor the link; and
divert, after detecting at least one lane of the first subset of lanes is in a failure status, data from the at least one lane of the first subset of lanes to the at least one other lane.

17. A method, comprising:
monitoring, by one or more processors of a first device, a link between a first set of transceivers, wherein:
the link comprises a plurality of lanes being configured to route traffic between the sets of transceivers, and
each lane has a respective status including at least one of active, failure, or inactive;
and
diverting, by the one or more processors after detecting at least one lane of the plurality of lanes is in a failure status, traffic to be transmitted via the at least one lane to another lane having a status of inactive.
